(19) Europäisches Patentamt
European Patent Office
Office européen des brevets

(11) Veröffentlichungsnummer: **0 236 881 B1**

# (12) EUROPÄISCHE PATENTSCHRIFT

(45) Veröffentlichungstag der Patentschrift: **29.04.92**

(51) Int. Cl.$^5$: **B05D 7/02**, B29D 11/00, G02B 6/16

(21) Anmeldenummer: **87102847.8**

(22) Anmeldetag: **27.02.87**

## (54) Lichtwellenleiter mit Kern-Mantel-Struktur.

(30) Priorität: **06.03.86 DE 3607301**

(43) Veröffentlichungstag der Anmeldung:
**16.09.87 Patentblatt 87/38**

(45) Bekanntmachung des Hinweises auf die Patenterteilung:
**29.04.92 Patentblatt 92/18**

(84) Benannte Vertragsstaaten:
**AT BE CH DE ES FR GB IT LI LU NL SE**

(56) Entgegenhaltungen:
**EP-A- 0 109 586**
**EP-A- 0 112 564**
**EP-A- 0 128 516**
**EP-A- 0 144 712**
**US-A- 4 568 146**
**US-E- 31 868**

(73) Patentinhaber: **HOECHST AKTIENGESELLSCHAFT**
**Postfach 80 03 20**
**W-6230 Frankfurt am Main 80(DE)**

(72) Erfinder: **Herbrechtsmeier, Peter, Dr.**
**Friedrich-Stolze-Strasse 10**
**W-6240 Königstein/Taunus(DE)**
Erfinder: **Fleissner, Manfred, Dr.**
**Ligusterweg 32**
**W-6236 Eschborn(DE)**
Erfinder: **Groh, Werner, Dr.**
**Geisenheimer Strasse 93**
**W-6000 Frankfurt am Main(DE)**
Erfinder: **Heumüller, Rudolf, Dr.**
**Sodener Weg 1**
**W-6232 Bad Soden am Taunus(DE)**
Erfinder: **Wieners, Gerhard, Dr.**
**Unterweg 17**
**W-6000 Frankfurt am Main(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 236 881 B1

Rank Xerox (UK) Business Services
(-/2.18/2.0)

## Beschreibung

Die Erfindung bezieht sich auf einen Lichtwellenleiter mit Kern-Mantel-Struktur, dessen Kern aus einem transparenten fluorfreien Polymer und dessen Mantel aus einem transparenten fluorhaltigen Polymer besteht, wobei die relative Brechzahldifferenz

$$\frac{n_{Kern} - n_{Mantel}}{n_{Kern}}$$

mindestens 0,2 Prozent beträgt, sowie ein Verfahren zur Herstellung dieses Leiters und dessen Verwendung.

Es ist bekannt, daß eine aus Kunststoff bestehende Lichtleitfaser einen Kern, der aus einem fluorfreien Polymer auf der Basis von Poly-(methylmethacrylat) besteht, und einen den Kern umhüllenden Mantel aufweist, der aus einem fluorhaltigen Polymer, z.B. Polymeren von Estern fluorierter Alkohole mit Methacrylsäure, besteht (Europäische Anmeldungsveröffentlichung 0 155 567). Der Brechungsindex des Mantelpolymers soll dabei wenigstens 1 % geringer sein als der Brechungsindex des Kernpolymers, und das Kernpolymer und das Mantelpolymer sollen eine Glasumwandlungstemperatur von über 80 °C aufweisen. Die Herstellung der Lichtleitfaser erfolgt entweder durch einen Spinnprozeß, bei dem Kernpolymer und Mantelpolymer aus einer speziellen Düse extrudiert werden, oder durch einen Beschichtungsprozeß, bei dem eine Faser aus dem Kernpolymer mit einer Lösung des Mantelpolymers beschichtet und das Lösungsmittel anschließend entfernt wird.

Aufgabe der Erfindung ist die Bereitstellung eines Lichtwellenleiters mit einer Kern-Mantel-Struktur, wobei Kern und Mantel aus verschiedenen Polymeren bestehen und die Haftung zwischen Kern und Mantel nicht beeinträchtigt ist.

Die Erfindung betrifft einen lichtwellenleiter mit Kern-Mantel-Struktur, dessen Kern aus einem transparenten fluorfreien Polymer und dessen Mantel aus einem transparenten fluorhaltigen Polymer besteht, wobei die relative Brechzahldifferenz

$$\frac{n_{Kern} - n_{Mantel}}{n_{Kern}}$$

mindestens 0,2 Prozent beträgt, und ist dadurch gekennzeichnet, daß das Kern-Polymer im wesentlichen ein Methylmethacrylatpolymer oder ein Polycarbonat und das Mantel-Polymer im wesentlichen ein Polymer ist, das Monomereinheiten enthält, welche sich von einer Verbindung der Formel (1) ableiten,

(1) $H_2C = CF - CO - O - C(CF_3)_2 - X$

in der X ein Wasserstoffatom oder ein Deuteriumatom bedeutet.

Die Erfindung betrifft ferner ein Verfahren zur Herstellung eines Lichtwellenleiters mit Kern-Mantel-Struktur, dessen Kern aus einem transparenten fluorfreien Polymer und dessen Mantel aus einem transparenten fluorhaltigen Polymer besteht, wobei die relative Brechzahldifferenz

$$\frac{n_{Kern} - n_{Mantel}}{n_{Kern}}$$

mindestens 0,2 Prozent beträgt, durch Umhüllen des faserförmigen Kern-Polymers mit einer Schicht des Mantel-Polymers, das dadurch gekennzeichnet ist, daß ein Stab, der im wesentlichen aus einem Methylmethacrylatpolymer oder einem Polycarbonat besteht, durch eine Lösung eines Polymers, das Monomereinheiten enthält, welche sich von einer Verbindung der Formel (1) ableiten

(1) $H_2C = CF - CO- O - C(CF_3)_2 -X$,

in der X ein Wasserstoffatom oder ein Deuteriumatom bedeutet, in einem wasserfreien organischen Lösungsmittel, das das Kern-Polymer im wesentlichen nicht löst, gezogen wird und dann das Lösungsmittel entfernt wird.

Das Kern-Polymer vorzugsweise ist im wesentlichen ein Methylmethacrylatpolymer, d.h. ein Methylmethacrylathomopolymer oder ein Copolymer aus Methylmethacrylat und einem anderen Vinylmonomer, oder ein Polycarbonat, vorzugsweise ein Polyester der Kohlensäure mit Dihydroxydiphenyl-2,2-propan. Das Kern-Polymer besitzt vorzugsweise eine mittlere Molmasse (gemessen nach der Lichtstreuungsmethode) von $8 \cdot 10^4$ bis $25 \cdot 10^4$, z.B. von $1 \cdot 10^5$ bis $2 \cdot 10^5$, eine Glasumwandlungstemperatur von 100 bis 170 °C, vorzugsweise 110 bis 150 °C, und eine Brechzahl ($n_D^{23}$) von 1,4 bis bis 1,6, vorzugsweise 1,44 bis 1,59. Das Kern-Polymer kann auch ein Gemisch aus einem Methylmethacrylatpolymer und einem Polycarbonat sein.

Das Mantel-Polymer ist im wesentlichen ein Polymer, das Monomereinheiten enthält, welche sich von einer Verbindung der Formel (1) ableiten,

(1) $H_2C = CF - CO - O - C(CF_3)_2 - X$,

in der X ein Wasserstoffatom oder ein Deuteriumatom bedeutet. Die infragekommenden Monomeren sind α-Fluoracrylsäureehexafluorisopropylester und α-Fluoracrylsäuredeuterohexafluorisopropylester. Das Mantel-Polymer besitzt vorzugsweise eine mittlere Molmasse (gemessen nach der Lichtstreuungsmethode) von 8000 bis 5000000, z.B. von 10000 bis 200000, eine Glasumwandlungstemperatur von 95 bis 150°C, vorzugsweise 100 bis 145°C, und eine Brechsahl ($n_D^{23}$ ) von 1,34 bis 1,46, vorzugsweise von 1,348 bis 1,400. Das Mantel-Polymer kann auch ein Polymergemisch sein.

Das Mantel-Polymer ist in üblicher Weise durch Polymerisation, vorzugsweise in Masse, der Monomeren α-Fluoracrylsäurehexafluorisopropylester oder α-Fluoracrylsäuredeuterohexafluorisopropylester mit Hilfe eines radikalisch wirkenden Initiators bei einer Temperatur von 60 bis 150°C erhältlich. Die Monomeren sind folgendermaßen herstellbar:

a) 150 g (1 mol) α-Fluormalonsäuredimethylester (s. Journal of Fluorine Chemistry 25 (1984), 203 - 212) werden bei einer Temperatur von 25°C tropfenweise innerhalb einer Stunde zu einem Gemisch aus 96 g einer 35-gewichtsprozentigen wäßrigen Lösung von Formaldehyd (1,1 mol) und 10 g (0,1 mol) Kaliumhydrogencarbonat gegeben. Die Reaktionslösung wird dann mit dem vierfachen Volumen einer gesättigten wäßrigen Ammoniumchloridlösung vermischt, und das Gemisch wird dreimal mit jeweils 150 ml Dichlormethan extrahiert. Die vereinigten Extraktionslösungen werden über Natriumsulfat getrocknet. Nach Verdampfen des Dichlormethan wird α-Hydroxymethyl-α-fluormalonsäuredimethylester als farbloser Feststoff erhalten.

180 g (1 mol) α-Hydroxymethyl-α-fluormalonsäuredimethylester werden in 1,5 1 6-N-Salzsäure 2,5 Stunden lang zum Sieden erhitzt und dadurch dehydratisiert und decarboxyliert. Nach beendeter Gasentwicklung wird das Reaktionsgemisch bei einem Druck von 700 mbar destilliert, und das Destillat wird dreimal mit jeweils 150 ml Diethylether extrahiert. Die vereinigten Extraktionslösungen werden über Natriumsulfat getrocknet. Nach Einleiten von 19 g (1,1 mol) gasförmigem Ammoniak in die Etherlösung wird das Ammoniumsalz der α-Fluoracrylsäure als farbloser Feststoff erhalten.

107 g (1 mol) des Ammoniumsalzes der α-Fluoracrylsäure werden mit 14,5 g (0,2 mol) Dimethylformamid und 0,6 l Xylol vermischt, und das Gemisch wird innerhalb einer Stunde tropfenweise mit 131 g (1,1 mol) Thionylchlorid versetzt; anschließend wird das Gemisch zwei Stunden lang auf eine Temperatur von 80°C erwärmt. Nach Abkühlen auf eine Temperatur von 0°C wird dem Reaktionsgemisch ein Gemisch aus 204 g (1,1 mol) Tributylamin und 185 g (1,1 mol) Hexafluorisopropanol innerhalb von 30 min zugefügt. Dann wird das Gemisch noch eine Stunde lang bei einer Temperatur von 30°C gerührt und schließlich filtriert. Das Filtrat wird bei einem Druck von 270 mbar destilliert, und es wird α-Fluoracrylsäurehexafluorisopropylester als farblose Flüssigkeit erhalten.

b) Analog zur Verfahrensweise a) wird α-Fluoracrylsäuredeuterohexafluorisopropylester erhalten, wenn in der dritten Stufe Dideuterohexafluorisopropanol anstatt Hexafluorisopropanol verwendet wird.

Der erfindungsgemäße Lichtwellenleiter wird durch Umhüllen eines Stabes aus dem Kern-Polymer mit einer Schicht des Mantel-Polymers hergestellt. Dazu wird das stabförmige Kern-Polymer durch eine Lösung des Mantel-Polymers in einem wasserfreien organischen Lösungsmittel, das das Kern-Polymer im wesentlichen nicht löst, gezogen, und anschließend wird das Lösungsmittel entfernt.

Als Lösungsmittel, das das Kern-Polymer im wesentlichen nicht löst, d.h. gar nicht oder nur sehr schlecht löst, dient insbesondere ein niederes Alkanol, vorzugsweise Methanol, ein niederes Keton, vorzugsweise Aceton, oder ein Essigsäureester eines niederen Alkanols, vorzugsweise Essigsäureethylester. Gegebenenfalls wird das Lösungsmittel in Form eines Gemisches von mehreren der vorgenannten einzelnen Lösungsmittel verwendet. Die Konzentration des Mantel-Polymers in der Lösung beträgt 2 bis 15, vorzugsweise 6 bis 10 Gewichtsprozent.

Der Kern-Polymer-Stab besitzt einen Durchmesser von 0,1 bis 2 mm, vorzugsweise 0,5 bis 1 mm. Zur Beschichtung mit dem Mantel-Polymer wird er durch die Lösung des Mantel-Polymers geführt, die sich in einem Gefäß befindet, das am Boden eine Kapillaröffnung mit kreisförmigem Querschnitt aufweist; dessen Durchmesser liegt 10 bis 40 Prozent über dem jeweiligen Stabdurchmesser. Unmittelbar nach dem Austritt aus der Kapillaröffnung wird der beschichtete Stab vom anhaftenden Lösungsmittel befreit. Dies erfolgt insbesondere durch Verdampfen bei einer Temperatur von 30 bis 120°C, vorzugsweise 50 bis 100°C, und einem Druck von 200 bis 1000 mbar, vorzugsweise 800 bis 1000 mbar. Die Dicke des so erhaltenen Mantels beträgt 0,003 bis 0,05 mm, vorzugsweise 0,005 bis 0,02 mm.

Der erfindungsgemäße Lichtwellenleiter eignet sich zur Übertragung von Daten mit Hilfe von Lichtwellen mit einer Wellenlänge von 500 bis 750 nm,

vorzugsweise 600 bis 670 nm. Er zeigt eine Dämpfung von höchstens 1500, vorzugsweise höchstens 1000 dB(A)/km.

Das nachstehende Beispiel dient zur näheren Erläuterung der Erfindung. Prozentangaben beziehen sich jeweils auf das Gewicht.

Beispiel

Eine 10prozentige Lösung von Poly(α-fluoracrylsäure-hexafluorisopropylester), das eine mittlere Molmasse von 150000 (gemessen nach der Lichtstreuungsmethode), eine Glasumwandlungstemperatur von 109 °C und eine Brechzahl von $n_D^{23}$ = 1,355 aufwies, in wasserfreiem Methanol wurde in ein Gefäß gegeben, das am Boden eine Kapillaröffnung mit kreisförmigem Querschnitt mit einem Durchmesser von 1 mm aufwies. Durch die Lösung und durch die Kapillaröffnung wurde ein Stab aus Poly(methylmethacrylat), das eine mittlere Molmasse von 180 000 (gemessen nach der Lichtstreuungsmethode), eine Glasumwandlungstemperatur von 107 °C und eine Brechzahl von $n_D^{23}$ = 1,49 aufwies, gezogen; der Durchmesser des Stabesbetrug 0,8 mm. Unmittelbar nach dem Austritt aus der Kapillaröffnung wurde der beschichtete Stab durch ein Luftbad geführt, das mit Hilfe von zwei Heizstrahlern auf einer Temperatur von 70 °C gehalten wurde. Dadurch verdampfte das Methanol, und es resultierte eine auf den Kern fest haftende Schicht von Poly(α-fluoracrylsäure-hexafluorisopropylester), deren Dicke 0,02 mm betrug. Der so erhaltene Lichtwellenleiter mit Kern-Mantel-Struktur zeigte bei der Anwendung als Datenüberträger mit Hilfe von Lichtwellen der Wellenlänge 670 nm eine Dämpfung von 800 dB(A)/km.

**Patentansprüche**

**Patentansprüche für folgende Vertragstaaten : BE, CH, DE, FR, GB, IT, LI, LU, NL, SE**

1. Lichtwellenleiter mit Kern-Mantel-Struktur, dessen Kern aus einem transparenten fluorfreien Polymer und dessen Mantel aus einem transparenten fluorhaltigen Polymer besteht, wobei die relative Brechzahldifferenz

$$\frac{n_{Kern} - n_{Mantel}}{n_{Kern}}$$

mindestens 0,2 Prozent beträgt, dadurch gekennzeichnet, daß das Kern-Polymer im wesentlichen ein Methylmethacrylatpolymer oder ein Polycarbonat und das Mantel-Polymer im wesentlichen ein Polymer ist, das Monomereinheiten enthält, welche sich von einer Verbindung der Formel (1) ableiten,

(1) $H_2C = CF\text{-}CO\text{-}O\text{-}C(CF_3)_2\text{-}X$

in der X ein Wasserstoffatom oder ein Deuteriumatom bedeutet.

2. Verfahren zur Herstellung eines Lichtwellenleiters mit Kern-Mantel-Struktur, dessen Kern aus einem transparenten fluorfreien Polymer und dessen Mantel aus einem transparenten fluorhaltigen Polymer besteht, wobei die relative Brechzahldifferenz

$$\frac{n_{Kern} - n_{Mantel}}{n_{Kern}}$$

mindestens 0,2 Prozent beträgt, durch Umhüllen des stabformigen Kern-Polymers mit einer Schicht des Mantel-Polymers, dadurch gekennzeichnet, daß ein Stab, der im wesentlichen aus einem Methylmethacrylatpolymer oder einem Polycarbonat besteht, durch eine Lösung eines Polymers, das Monomereinheiten enthält, welche sich von einer Verbindung der Formel (1) ableiten,

(1) $H_2C = CF\text{-}CO\text{-}O\text{-}C(CF_3)_2\text{-}X$

in der X ein Wasserstoffatom oder ein Deuteriumatom bedeutet, in einem wasserfreien organischen Lösungsmittel, das das Kern-Polymer im wesentlichen nicht löst, gezogen wird und dann das Lösungsmittel entfernt wird.

3. Verfahren nach Anspruch 2, dadurch gekennzeichnet, daß als Lösungsmittel ein niederes Alkanol, ein niederes Keton oder ein Essigsäureester eines niederen Alkanols verwendet wird.

4. Verfahren nach Anspruch 2, dadurch gekennzeichnet, daß die Entfernung des Lösungsmittels durch Verdampfen bei einer Temperatur von 30 bis 120 °C durchgeführt wird.

5. Verwendung des Lichtwellenleiters gemäß Anspruch 1 zur Übertragung von Daten mit Hilfe von Lichtwellen mit einer Wellenlänge von 500 bis 750 nm.

**Patentansprüche für folgende Vertragsstaaten : AT, ES**

1. Verfahren zur Herstellung eines Lichtwellenleiters mit Kern-Mantel-Struktur, dessen Kern aus einem transparenten fluorfreien Polymer und dessen Mantel aus einem transparenten fluorhaltigen Polymer besteht, wobei die relative Brechzahldifferenz

$$\frac{n_{Kern} - n_{Mantel}}{n_{Kern}}$$

mindestens 0,2 Prozent beträgt, durch Umhüllen des stabförmigen Kern-Polymers mit einer Schicht des Mantel-Polymers, dadurch gekennzeichnet, daß ein Stab, der im wesentlichen aus einem Methylmethacrylatpolymer oder einem Polycarbonat besteht, durch eine Lösung eines Polymers, das Monomereinheiten enthält, welche sich von einer Verbindung der Formel (1) ableiten,

(1) $H_2C = CF\text{-}CO\text{-}O\text{-}C(CF_3)_2\text{-}X$

in der X ein Wasserstoffatom oder ein Deuteriumatom bedeutet, in einem wasserfreien organischen Lösungsmittel, das das Kern-Polymer im wesentlichen nicht löst, gezogen wird und dann das Lösungsmittel entfernt wird.

2. Verfahren nach Anspruch 1, dadurch gekennzeichnet, daß als Lösungsmittel ein niederes Alkanol, ein niederes Keton oder ein Essigsäureester eines niederen Alkanols verwendet wird.

3. Verfahren nach Anspruch 1, dadurch gekennzeichnet, daß die Entfernung des Lösungsmittels durch Verdampfen bei einer Temperatur von 30 bis 120 ° C durchgeführt wird.

4. Verwendung des nach Anspruch 1 hergestellten Lichtwellenleiters zur Übertragung von Daten mit Hilfe von Lichtwellen mit einer Wellenlänge von 500 bis 750 nm.

**Claims**

**Claims for the following Contracting States : BE, CH, DE, FR, GB, IT, LI, LU, NL, SE**

1. An optical waveguide with a core-cladding structure, the core of which consists of a transparent fluorine-free polymer and the cladding of which consists of a transparent fluorine-containing polymer, the relative refractive index difference

$$\frac{n_{core} - n_{cladding}}{n_{core}}$$

being at least 0.2 per cent, in which the core polymer is essentially a methyl methacrylate polymer or a polycarbonate and the cladding polymer is essentially a polymer containing monomer units derived from a compound of the formula (1)

(1) $H_2C = CF - CO - O - C(CF_3)_2 - X$

in which X is a hydrogen atom or a deuterium atom.

2. A process for the preparation of an optical waveguide with a core-cladding structure, the core of which consists of a transparent fluorine-free polymer and the cladding of which consists of a transparent fluorine-containing polymer, the relative refractive index difference

$$\frac{n_{core} - n_{cladding}}{n_{core}}$$

being at least 0.2 percent, by enclosing the rod-shaped core polymer with a layer of the cladding polymer, which comprises drawing a rod essentially consisting of a methyl methacrylate polymer or a polycarbonate through a solution of a polymer containing monomer units derived from a compound of the formula (1)

(1) $H_2C = CF - CO - O - C(CF_3)_2 - X$

in which X is a hydrogen atom or a deuterium atom, in an anhydrous organic solvent which essentially does not dissolve the core polymer, and then removing the solvent.

3. The process as claimed in claim 2, wherein a lower alkanol, a lower ketone or an acetic acid ester of a lower alkanol is used as the solvent.

4. The process as claimed in claim 2, wherein the removal of the solvent is carried out by evaporation at a temperature of 30 to 120 ° C.

5. The use of the optical waveguide as claimed in claim 1 for transmitting data with the aid of light waves having a wavelength of 500 to 750 nm.

**Claims for the following Contracting States : AT, ES**

1. A process for the preparation of an optical waveguide with a core-cladding structure, the core of which consists of a transparent fluorine-free polymer and the cladding of which consists of a transparent fluorine-containing polymer, the relative refractive index difference

$$\frac{n_{core}-n_{cladding}}{n_{core}}$$

being at least 0.2 percent, by enclosing the rod-shaped core polymer with a layer of the cladding polymer, which comprises drawing a rod essentially consisting of a methyl methacrylate polymer or a polycarbonate through a solution of a polymer containing monomer units derived from a compound of the formula (1)

(1) $H_2C = CF - CO - O - C(CF_3)_2 - X$

in which X denotes a hydrogen atom or a deuterium atom, in an anhydrous organic solvent which essentially does not dissolve the core polymer, and then removing the solvent.

2. The process as claimed in claim 1, wherein a lower alkanol, a lower ketone or an acetic acid ester of a lower alkanol is used as the solvent.

3. The process as claimed in claim 1, wherein the removal of the solvent is carried out by evaporation at a temperature of 30 to 120 °C.

4. The use of the optical waveguide prepared as claimed in claim 1 for transmitting data with the aid of light waves having a wavelength of 500 to 750 nm.

**Revendications**

**Revendications pour les Etats contractants suivants : BE, CH, DE, FR, GB, IT, LI, LU, NL, SE**

1. Guide d'ondes optiques ayant une structure en coeur-gaine, dont le coeur est constitué d'un polymère transparent non fluoré et dont la gaine est constituée d'un polymère transparent fluoré, la différence relative d'indice de réfraction

$(n_{coeur} - n_{gaine}) / n_{coeur}$

étant d'au moins 0,2 %, caractérisé en ce que le polymère de coeur est pour l'essentiel un polymère de méthacrylate de méthyle ou un polycarbonate, et le polymère de gaine est essentiellement un polymère contenant des motifs monomères qui dérivent d'un composé de formule (1)

$H_2C = CF - CO - O - C(CF_3)_2 - X$ (1)

dans laquelle X est un atome d'hydrogène ou un atome de deutérium.

2. Procédé de fabrication d'un guide d'ondes optiques ayant une structure en coeur-gaine, dont le coeur est constitué d'un polymère transparent non fluoré et dont la gaine est constituée d'un polymère transparent fluoré, la différence relative d'indice de réfraction

$(n_{coeur} - n_{gaine}) / n_{coeur}$

étant d'au moins 0,2 %, par enrobage du polymère de coeur, en forme de barre, par une couche du polymère de gaine, caractérisé en ce qu une barre, constituée pour l'essentiel d'un polymère du méthacrylate de méthyle ou d'un polycarbonate, est tiré à travers une solution d'un polymère contenant des motifs monomères, qui dérivent d'un composé de formule (1)

$H_2C = CF - CO - O - C(CF_3)_2 - X$ (1)

dans laquelle X est un atome d'hydrogène ou un atome de deutérium, dans un solvant organique anhydre qui pratiquement ne dissout pas le polymère de coeur, le solvant étant ensuite éliminé.

3. Procédé selon la revendication 2, caractérisé en ce qu'on utilise comme solvant un alcanol inférieur, une cétone inférieure ou un acétate d'un alcanol inférieur.

4. Procédé selon la revendication 2, caractérisé en ce que l'élimination du solvant est mise en oeuvre par évaporation à une température de 30 à 120 °C.

5. Utilisation du guide d'ondes optiques selon la revendication 1 pour la transmission de données à l'aide d'ondes lumineuses ayant une longueur d'onde de 500 à 750 nm.

**Revendications pour les Etats contractants suivants : AT, ES**

1. Procédé de fabrication d'un guide d'ondes optiques ayant une structure en coeur-gaine, dont le coeur est constitué d'un polymère transparent non fluoré et dont la gaine est constituée d'un polymère transparent fluoré, la différence relative d'indice de réfraction

$(n_{coeur} - n_{gaine}) / n_{coeur}$

étant d'au moins 0,2 %, par enrobage du polymère de coeur, en forme de barre, par une couche du polymère de gaine, caractérisé en ce qu'une barre, constituée pour l'essentiel d'un polymère du méthacrylate de méthyle ou d'un polycarbonate, est tiré à travers une solution d'un polymère contenant des motifs monomères, qui dérivent d'un composé de formule (1)

$H_2C = CF - CO - O - C(CF_3)_2 - X$ (1)

dans laquelle X est un atome d'hydrogène ou un atome de deutérium, dans un solvant organique anhydre qui pratiquement ne dissout pas le polymère de coeur, le solvant étant ensuite éliminé.

2. Procédé selon la revendication 2, caractérisé en ce qu'on utilise comme solvant un alcanol inférieur, une cétone inférieure ou un acétate d'un alcanol inférieur.

3. Procédé selon la revendication 2, caractérisé en ce que l'élimination du solvant est mise en oeuvre par évaporation à une température de 30 à 120 °C.

4. Utilisation du guide d'ondes optiques selon la revendication 1 pour la transmission de données à l'aide d'ondes lumineuses ayant une longueur d'onde de 500 à 750 nm.